# EUROPEAN PATENT APPLICATION

(11) **EP 0 917 035 A2**
(43) Date of publication of application: **19.05.1999**
(21) Application number: 98307879.1
(22) Date of filing: 29.09.1998
(51) Int. Cl.: G05B 19/42, G05B 19/4099

(54) **An automatic three-dimension engraving device**

(30) Priority: 12.11.1997 JP 329448/97
(71) Applicant: Watanabe, Masahiro, Itabashi-ku, Tokyo (JP)
(72) Inventor: Watanabe, Masahiro, Itabashi-ku, Tokyo (JP)
(74) Representative: Waldren, Robin Michael

(57) **Abstract**

The present invention can measure a data from a subject like a person at non-touch in 3-D, convert the data to an exclusive data for an automatic three-dimension engraver and engrave automatically a coin, medal, confectionary, or ice tray inthe shape of a projecting or a concavity using the data.

## Description

### BACKGROUND OF THE INVENTION

This invention relates to an automatic three-dimension(3-D) engraving device which can be measured a data in 3-D shape about a subject like a person at non-touch and which can engrave a 3-D engraving body like a coin in the shape of a projecting or a concavity automatically using the data in 3-D shape.

When a conventional coin, medal, confectionery, ice tray or the like is engraved in the 3-D shape, they are engraved by a 3-D machine tool which is operated with a 3-D CAM date.

In the above-mentioned 3-D machine tool, it is too hard to input the 3-D CAM date into it, and it takes a lot of time. Moreover, it is difficult to engrave the 3-D engraving body like a coin, medal, confectionery, ice tray or the like in a short time.

### SUMMARY OF THE INVENTION

In view of the foregoing, it is an object to the present invention to provide an automatic 3-D engraving device that anyone can operate it easily.

It is another object to the present invention to provide an automatic 3-D engraving device which can engrave easily a 3-D engraving body like a coin, medal, confectionery, ice tray or the like in the shape of a projection or a concavity in a short time.

The above and further objects and novel features of the invention will more fully appear from the following detailed description when the same is read in connection with the accompanying drawings. It is to be expressly understood, however, that the drawings are for the purpose of illustration only and are not intended as a definition of the limits of the invention.

### BRIEF DESCRIPTION OF THE DRAWINGS

Fig.1 is a front view showing the first embodiment of the present invention;
Fig.2 is a side view showing the first embodiment of the present invention;
Fig.3 is a plan view showing the first embodiment of the present invention;
Fig.4 is a schematic explanation view showing the first embodiment of the present invention;
Fig.5 is a block diagram showing the first embodiment of the present invention;
Fig.6 is an explanation view of an automatic 3-D engraving device showing the first embodiment of the present invention;
Fig.7 is an explanation view of a supply mechanism for a 3-D engraving body showing the first embodiment of the present invention;
Fig.8 is an explanation view of a manipulator showing the first embodiment of the present invention;
Fig.9 is a front view the way in which a 3-D engraving body is engraved in 3-D by an automatic 3-D engraving device;
Fig.10 is an expanded cross-sectional view taken on line 10-10 of Fig.9;
Fig.11 is a schematic explanation view showing the second embodiment of the present invention;
Fig.12 is a side view showing the second embodiment of the present invention;
Fig.13 is a block diagram showing the second embodiment of the present invention;
Fig.14 is a schematic explanation view showing the third embodiment of the present invention;
Fig.15 is an explanation view of a digitizer for letters showing the third embodiment of the present invention;
Fig.16 is a block diagram showing the third embodiment of the present invention;
Fig.17 is a front view the way in which a 3-D engraving body is engraved in 3-D by an automatic 3-D engraving device;
Fig.18 is an expanded cross-sectional view taken on line 18-18 of Fig.17;
Fig.19 is a schematic explanation view showing the fourth embodiment of the present invention;
Fig.20 is a side view showing the fourth embodiment of the present invention;
Fig.21 is a block diagram showing the fourth embodiment of the present invention;
Fig.22 is a front view the way in which a 3-D engraving body is engraved in 3-D by an automatic 3-D engraving device;
Fig.23 is an expanded cross-sectional view taken on line 23-23 of Fig.22;
Fig.24 is a schematic explanation view showing the fifth embodiment of the present invention;
Fig.25 is a side view showing the fifth embodiment of the present invention;
Fig.26 is an explanation view the way in which a 3-D engraving body is engraved in 3-D by an automatic 3-D engraving device;
Fig.27 is an expanded cross-sectional view taken on line 27-27 of Fig.26;
Fig.28 is an explanation view of a 3-D engraving body engraved in 3-D in use;
Fig.29 is a schematic explanation view showing the sixth embodiment of the present invention;
Fig.30 is a side view showing the sixth embodiment of the present invention;
Fig.31 is an explanation view of a 3-D measuring instrument showing the sixth embodiment of the present invention;
Fig.32 is a block diagram showing the sixth embodiment of the present invention;
Fig.33 is a schematic explanation view showing the seventh embodiment of the present invention;
Fig.34 is an explanation view of a 3-D measuring instrument showing the seventh embodiment of the present invention;
Fig.35 is a block diagram showing the seventh embodiment of the present invention; and
Fig.36 is a drawing of a general idea about a 3-D measuring instrument showing the seventh embodiment of the present invention.

### DESCRIPTION OF THE PREFERRED EMBODIMENT

Preferred embodiments of the present invention will be described in more details referring to the accompanying drawings.

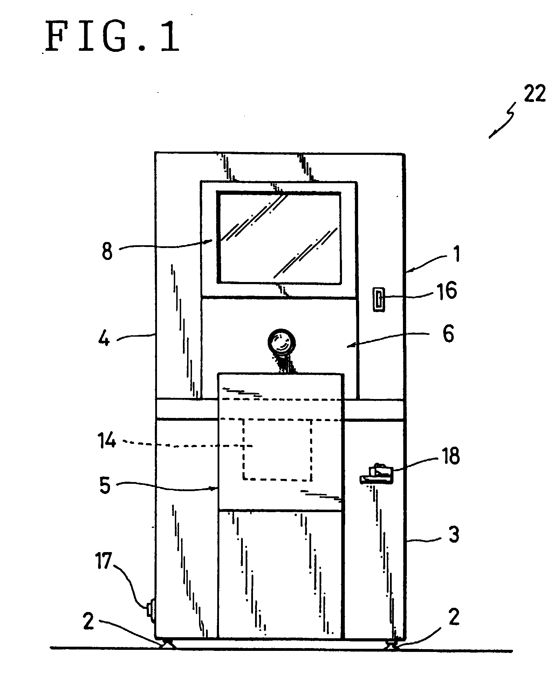

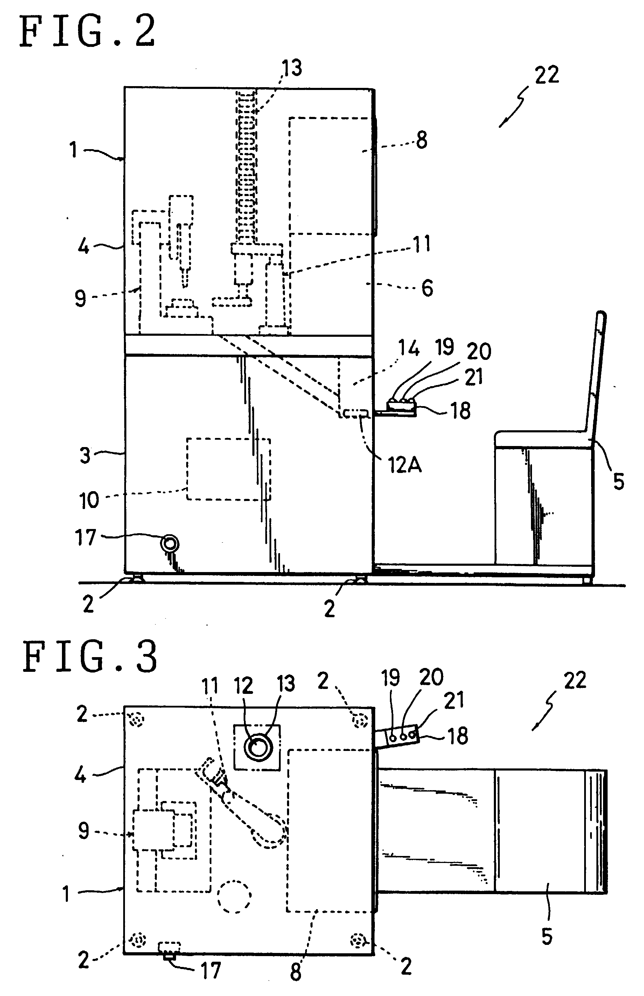

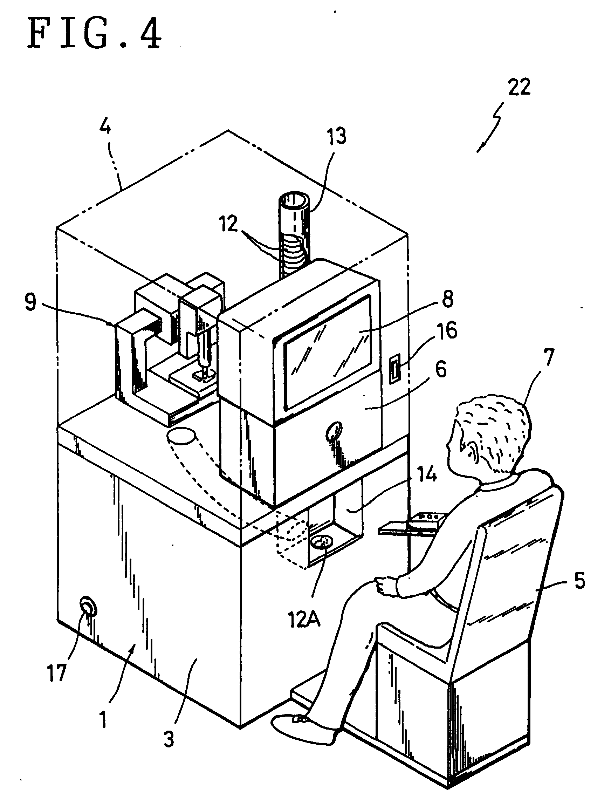

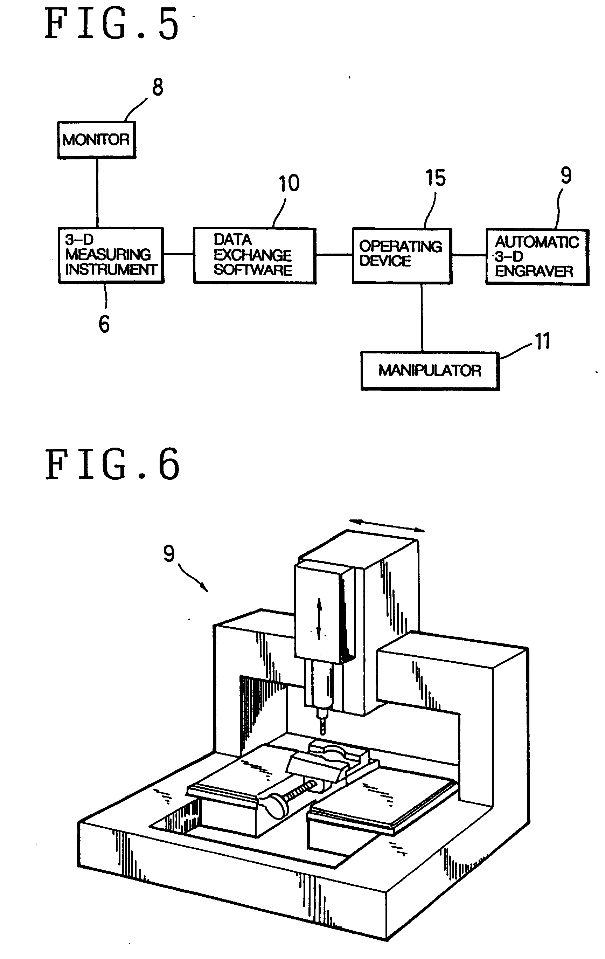

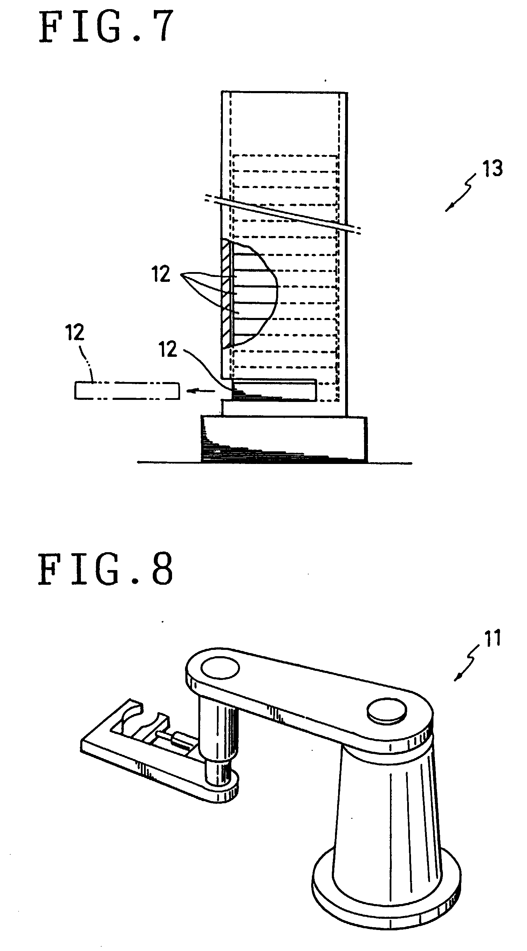

Figs.1 to 10 illustrate a first embodiment of the present invention. A numeral 1 is a case body and comprises a lower case body 3 having legs 2,2,2,2 for adjusting the height mounted on a bottom face thereof and an upper case body 4 fixed integrally to an upper portion of the lower case body 3.

The numeral 5 is a chair mounted to the case body 1 such that the chair 5 is placed in front of the case body 1.

The numeral 6 is a laser 3-D measuring instrument, using a laser beam, which is installed into the upper case body 4 such that a data for the upper half of the body of a person 7, as a subject, who sitted on the chair 5 can be measured at non-contact in 3-D. The laser 3-D measuring instrument 6 is used in the instrument which is on the market, for example, like "VIVID700" of a non-contact 3-D digitizer (manufacturing and sold by Minolta Co., Ltd.).

The numeral 8 is a monitor which is installed into the upper case body 4 that is placed at upper part of the laser 3-D measuring instrument 6 such that a person who is sitting on the chair 5 can see it. The monitor 8 can be shown an image which is measured by the laser 3-D measuring instrument.

The numeral 9 is an automatic 3-D engraver which is installed within the upper case body 4. The automatic 3-D engraver 9 is used in the general engraver, which is on the market, like "NC-5" of a desktop type modeling machine (manufacturing and sold by Mimaki Engineering Co., Ltd.), however, in case of engraving a head portion of the human body, the automatic 3-D engraver may be used in that it can engrave outwardly with a spiral in order from the central part thereof.

The numeral 10 is a data exchange software which is installed into the lower case body 3 and converts a measuring data of the laser 3-D measuring instrument 6 to an exclusive data of the automatic 3-D engraver 9.

The numeral 11 is a manipulator which is installed into the upper case body 4. The manipulator 11 carries a 3-D dimension engraving body 12 from a supply mechanism for 3-D engraving body 13 which supplies the 3-D engraving body 12 like a coin, cameo or the like, to the automatic 3-D engraver 9. Also the manipulator 11 works automatically to discharge a 3-D engraving body 12A engraved in 3-D from the automatic 3-D engraver 9 to a takeout opening 14 provided in the lower case body 3.

The numeral 15 is an operating device which is provided in front part of the upper case body 4 and which is operated automatically the laser 3-D measuring instrument 6, monitor 8, manipulator 11 and the automatic 3-D engraver 9 when a person throws coins which corresponds to a price set up beforehand into a coin slot 16. The operating device 15 comprises an ON-OFF switch 17 and an operating switch for the 3-D measuring instrument 19, a switch for cancellation and a okey switch 21 which are provided to a switch box 18 with the lower case body 3.

In an automatic 3-D engraving device 22 of the above-mentioned structure, when a person sits on the chair 5, throws coins which corresponds to price set up beforehand into the coin slot 16 and operates "ON" of the operating switch for the 3-D measuring instrument 19, the laser 3-D measuring instrument 6 works. Then, the laser 3-D measuring insturment 6 measures the 3-D shape data about the person who sitted on the chair 5, and its data is shown in the monitor 8.

When the person decided that the images which shown in the monitor 8 is okey, the 3-D shape data is converted to the exclusive data for the automatic 3-D engraver by the data exchange software 10, and the 3-D engraving body 12 is supplied into the automatic 3-D engraver 9 from the suppling mechanism for 3-D engraving body 12 with catching by the manipulator 11.

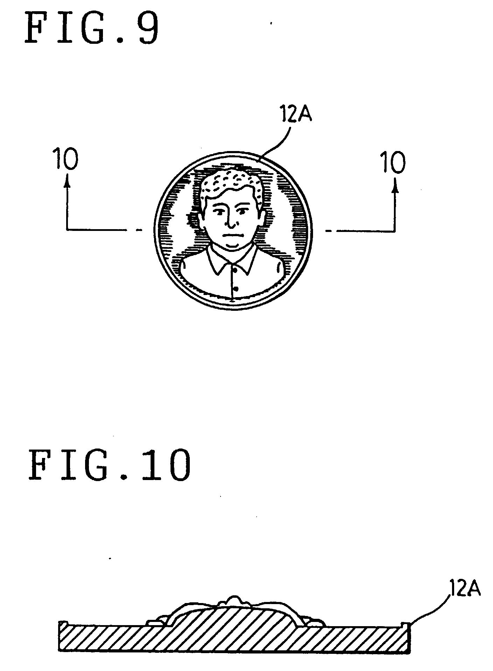

In this way, the automatic 3-D engraver 9 which works automatically using the exclusive data of the automatic 3-D engraver 9 was finished, and the manipulator 11 is operated and catches the 3-D engraving body 12A which is engraved in 3-D shape, and the 3-D engraving body 12A shown in Figs.9 and 10 is out from the automatic 3-D engraver 9 through the takeout opening 14.

Moreover, the 3-D shape data may be converted to the exclusive data of the automatic 3-D engraver 9 in order while the 3-D shape data measures. In addition, the 3-D engraving body 12 may be supplied into the automatic 3-D engraver 9 using the manipulator 11 before the exclusive data of the automatic 3-D engraver is input.

### DIFFERENT PREFERRED EMBODIMENTS OF THE INVENTION

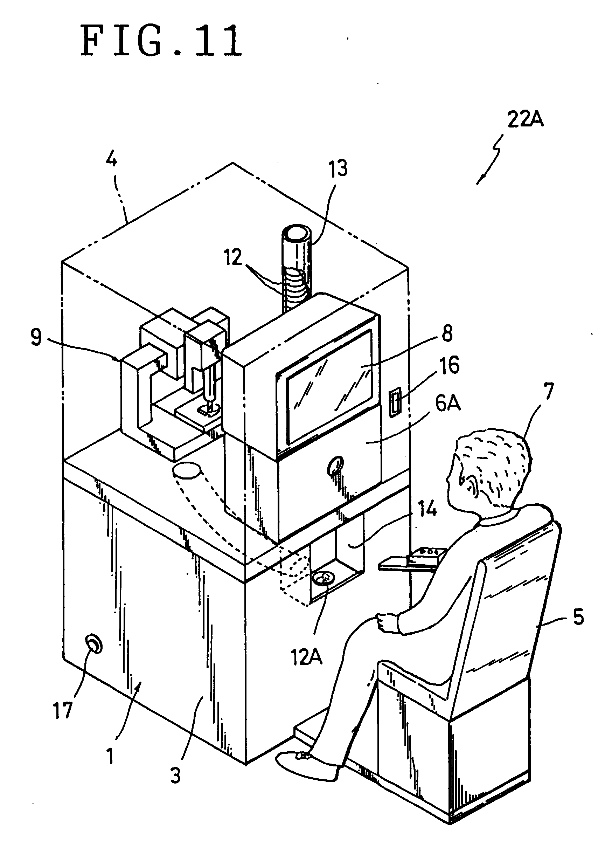

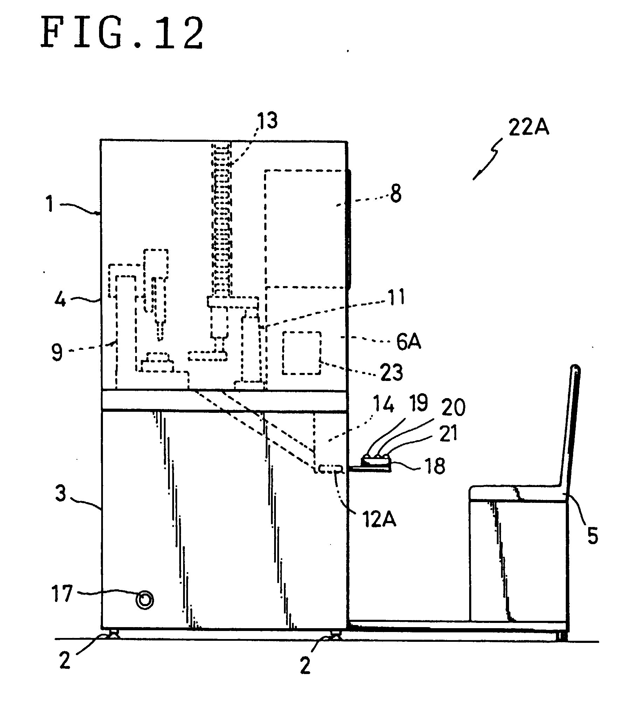

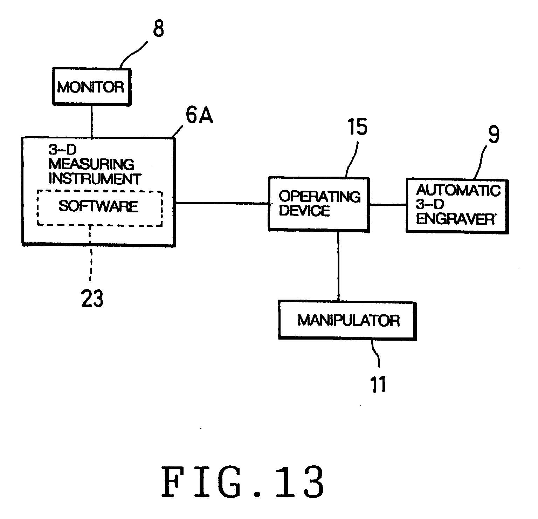

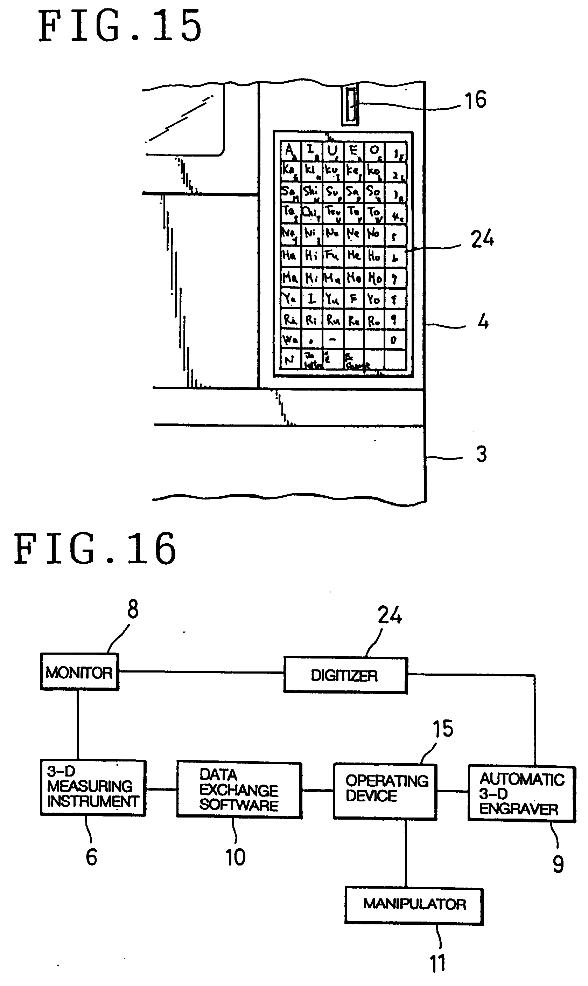

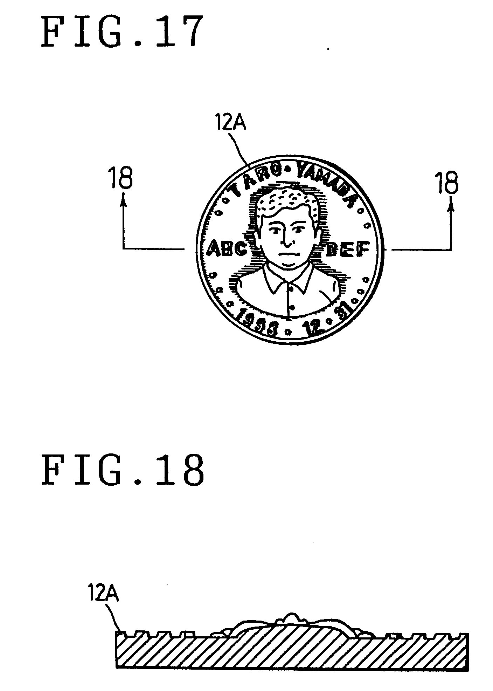

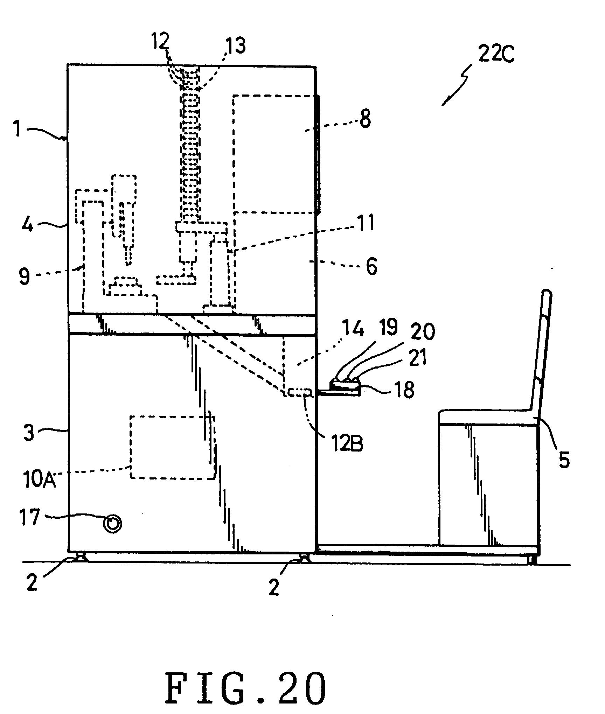

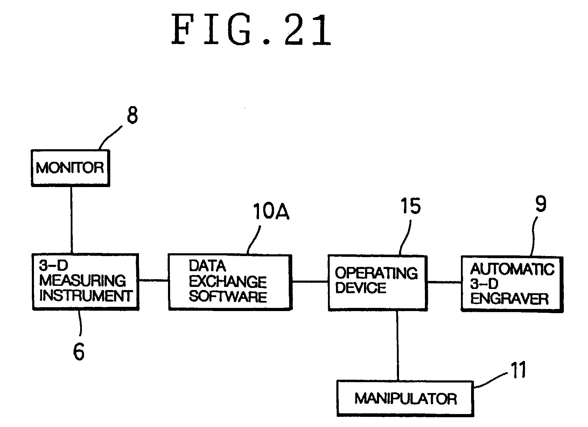

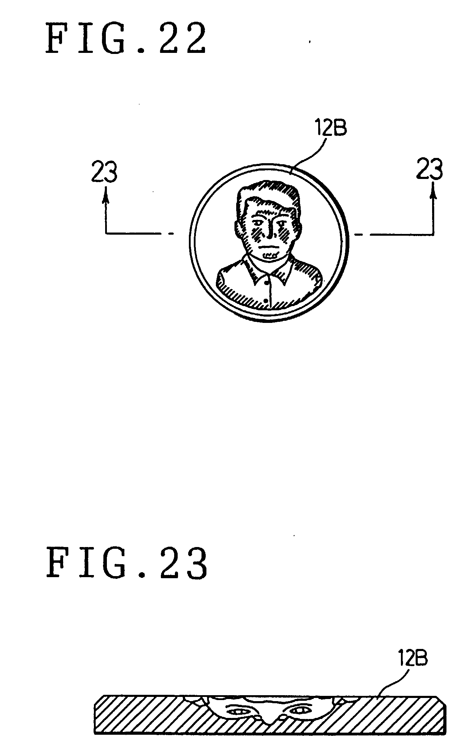

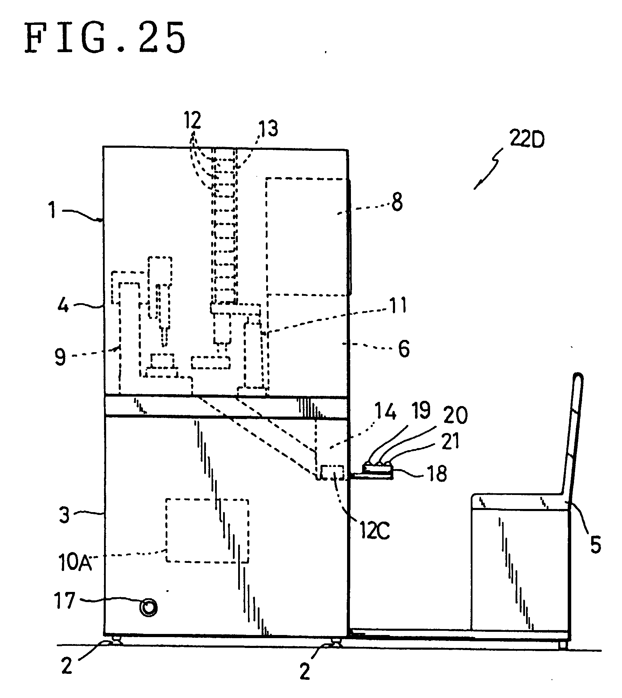

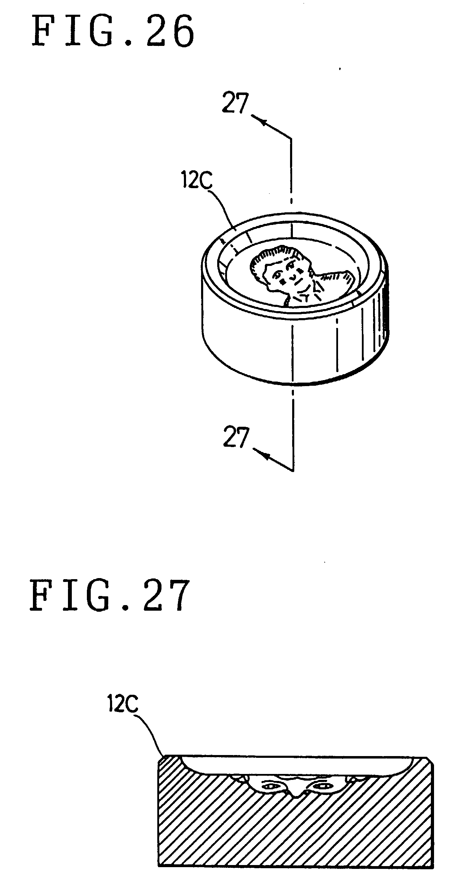

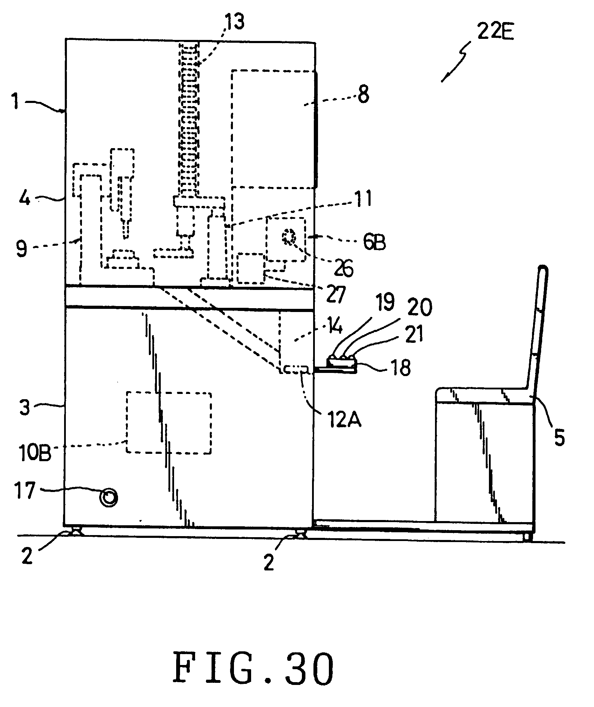

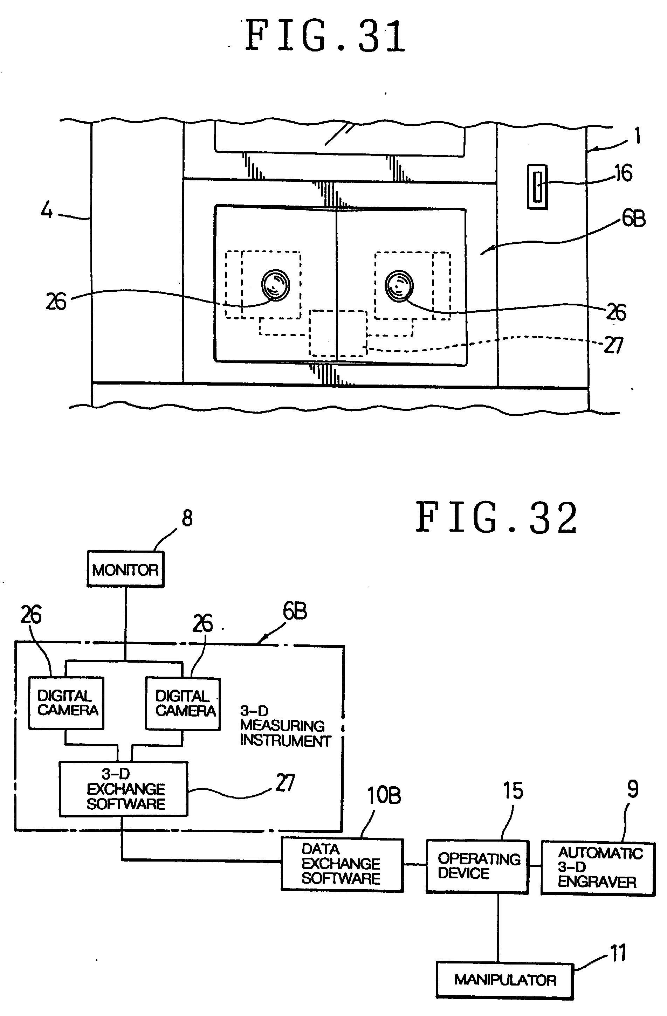

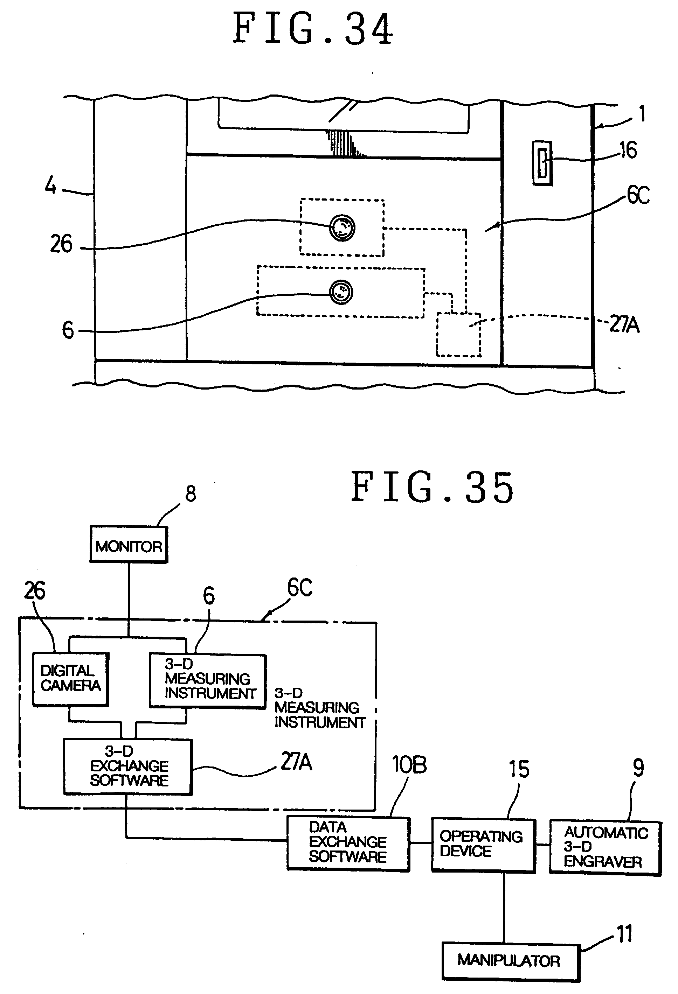

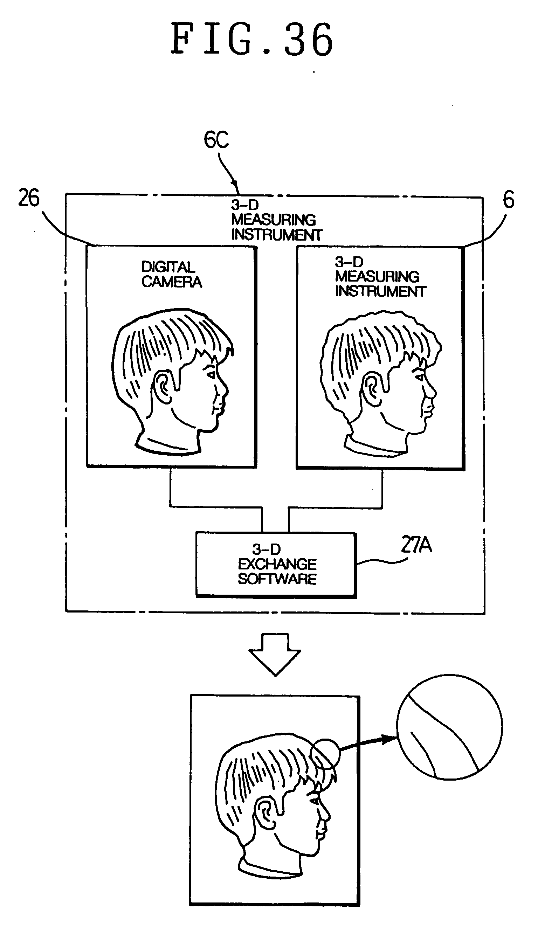

Other embodiments of the present invention will now be described referring to Figs.11 to 36. In the drawings of the embodiments, like components and denoted by like numerals as of the first embodiment and will be explained in more detail.

Figs.11 to 13 show a second embodiment of the present invention which is distinguished from the first embodiment by the fact that the laser 3-D measuring instrument 6 is replaced from another measuring instrument 6A. The laser 3-D measuring instrument 6A is used a software 23 which can output a measuring data as an exclusive data of the automatic 3-D engraver. An automatic 3-D engraving device 22A formed according to the second embodiment provided the same effects as the first embodiment.

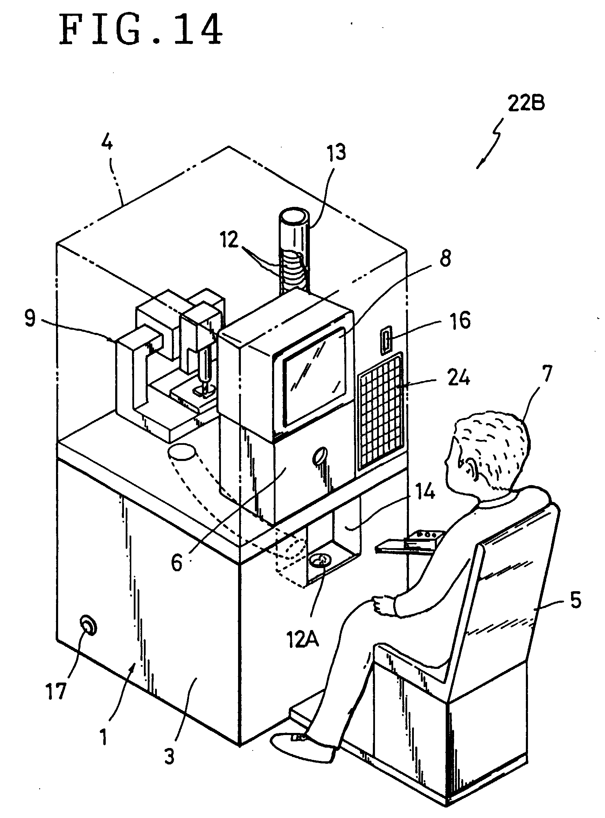

Figs.14 to 18 show a third embodiment of the present invention which is distinguished from the first embodiment by the fact that a digitizer 24 for letters provided with the upper case body 4 and is connected with the automatic 3-D engraver 9 and the monitor 8. An automatic engraving device 22B formed according to the third embodiment provides the same effects as the first embodiment and can produce the 3-D engraving body 12A which is engraved with the 3-D engraving and the letters.

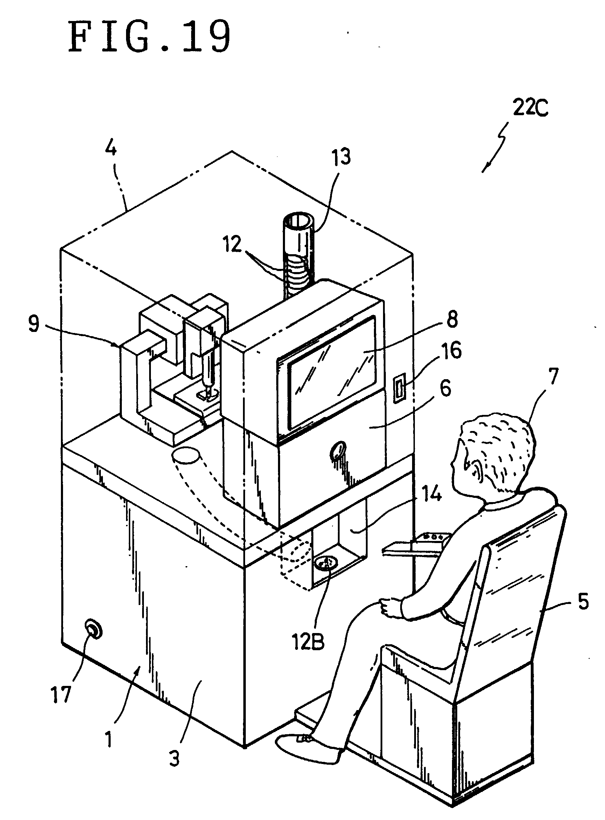

Figs.19 to 23 show a fourth embodiment of the present invention which is distinguished from the first embodiment by the fact that the data exchange software 10A can convert from the measuring data of the laser 3-D measuring instrument 6 to the exclusive data of automatic 3-D engraver 9 such that the 3-D engraving body 12 is engraved in 3-D in a concave shape. An automatic 3-D engraving device 22C formed according to the fourth embodiment provided the same effects as the first embodiment and can produce the 3-D engraving body 12B which is used in its own shape or is engraved in the shape of a concavity as a mold.

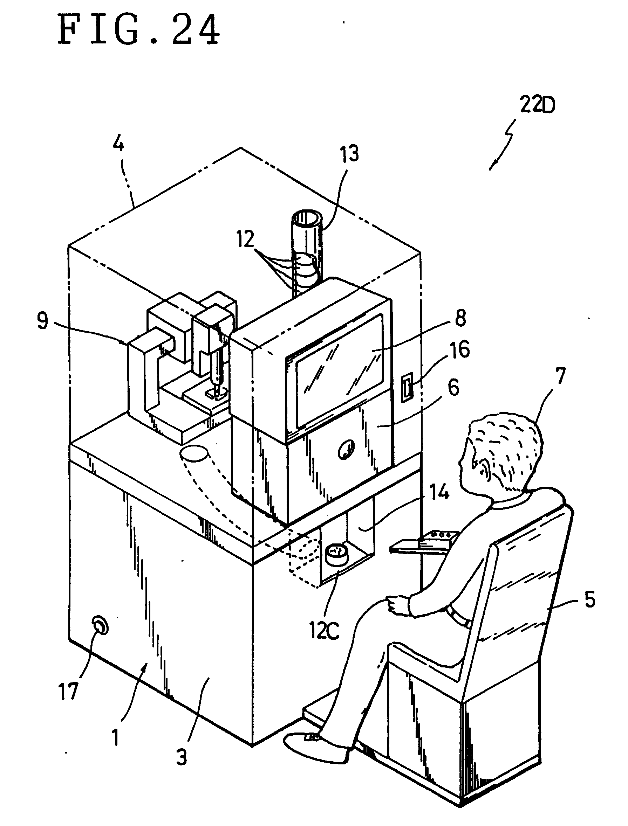

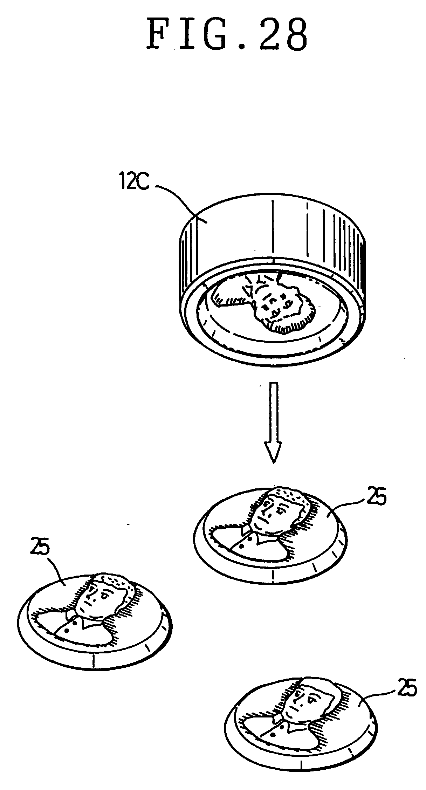

Figs.24 to 28 show a fifth embodiment of the present invention which is distinguished from the fourth embodiment by the fact that the 3-D engraving body 12B is replaced from another like engraving body 12C. The 3-D engraving body 12C shown in Fig.28 is in the shape of a concavity as a pattern and is processed in the shape of a concavity to engrave in 3-D to the 3-D engraving body 12. It is easy to make the pattern which can make a confectionery 25 like cookies with a 3-D shape of the upper half of a user's body using an automatic 3-D engraving device 22D formed according to the fifth embodiment.

In addition, in this embodiment, the automatic 3-D engraving device which produces the pattern of the confectionery like the cookies is explained, however, the present invention may be used in case that patterns for an ice tray, chocolate or jelly, or other patterns are produced.

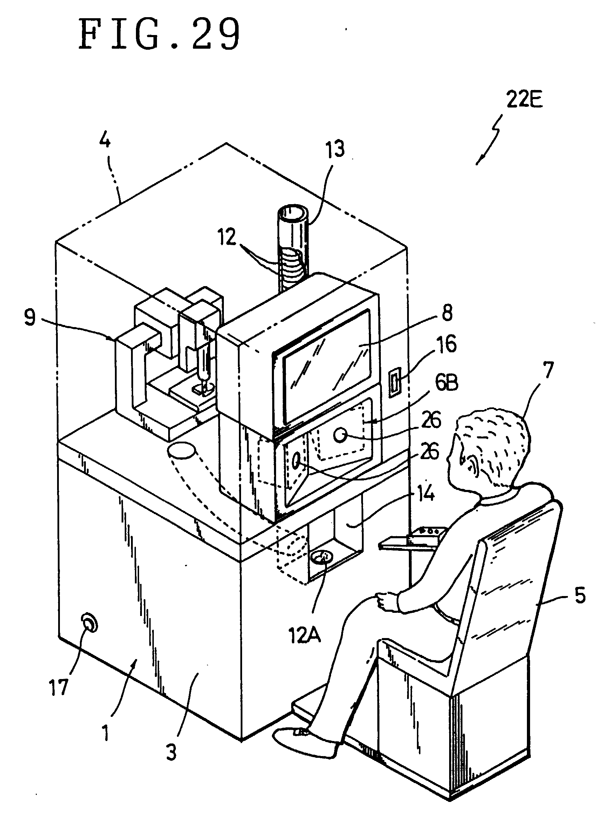

Figs.29 to 32 show a sixth embodiment of the present invention which is distinguished from the first embodiment by the fact that the three-dimension measuring instrument 6 is replaced from another like 6B and the data exchange software 10 is replaced from another like software 10B. The 3-D measuring instrument 6B comprises at least two digital cameras, two digital cameras 26,26 in this embodiment, are disposed at the different place and the 3-D exchange software 27 converts the data taken by two digital cameras 26,26 to the data in 3-D shape. The data exchange software 10B converts the data of the 3-D measuring instrument 6B to the exclusive data for automatic 3-D engraver 9. An automatic 3-D engraver device 22E formed according to the sixth embodiment provides the same effects as the first embodiment and can be used in two digital cameras 26,26 at a cheap price as the 3-D measuring instrument 6B.

In addition, in this embodiment, the use of the 3-D measuring instrument 6B with two digital cameras 26,26 and the 3-D exchange software 27 is explained, however, the 3-D exchnage software 27 may be installed into the data exchange software 10B.

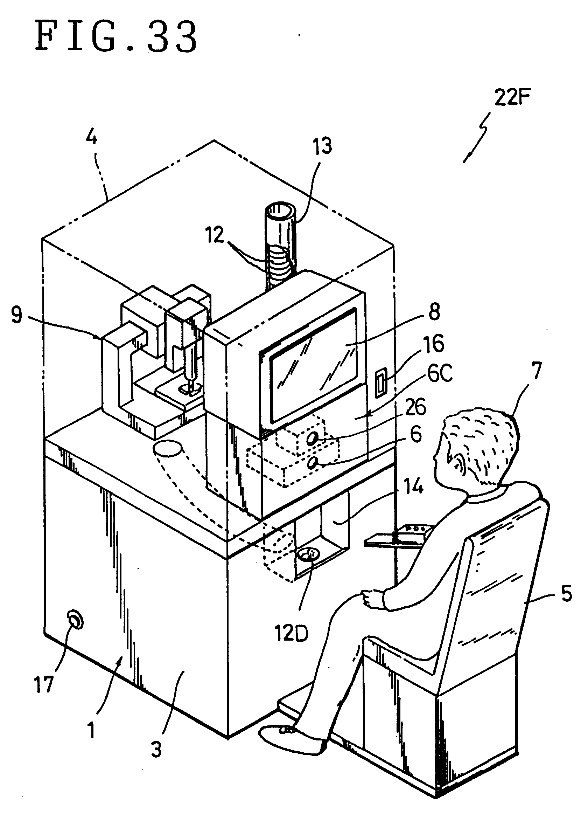

Figs.33 to 36 show a seventh embodiment of the present invention which is distinguished from the sixth embodiment by the fact that the 3-D measuring instrument 6 is replaced from another like measuring instrument 6C. The 3-D measuring instrument 6C measures the 3-D shape data by non-contact and converts its data to the 3-D data by a 3-D exchange software 27A using: the data of digital camera which is projected an outline portion of a person 7, as a subject, who sits on the chair 5; and the data of the laser 3-D measuring instrument 6 which is measured the portion without the outline by a laser beam. An automatic 3-D engraving device 22F with the 3-D measuring instrument 6C according to the seventh embodiment can produce a 3-D engraving body 12D which is engraved its outline sharply.

In addition, in each of embodiments of the present invention, the 3-D engraving body 12 which is engraved by the automatic 3-D engraver 9 may be made of materials which can engrave, such as a metal, jewel, stone, shell, timber, synthetic resin, clay, or the like.

Moreover, in each of the above described embodiments, in case of the 3-D measuring instrument using a laser beam, when a subject is a person, the person sits the chair 5 such that the engraving device can engrave a side face of the person from the front of its device. It prevents to apply a laser beam to eye of a subject and it is used in it safely.

Furthermore, using sunglasses or glasses with polarized light lens such that the laser beam does not apply to eye of the person, it produces safely a 3-D engraving from a front view.

Additionally, in case that a subject is a person 7, the portion measured by 3-D measuring instrument is set up the head portion without shoulder parts so that a level of uneven surface is set up greatly and a beautiful engraving of the head portion is finished.

As set forth, the advantages of the present invention are as follows:
(1) An automatic three-dimension engraving device comprises a case body, a 3-D measuring instrument installed into the case body and placed in front of a front surface of the case body, and measures 3-D shape data at non-contact, a data exchange software which converts the data with the 3-D measuring instrument to exclusive data for the automatic 3-D engraver, and a 3-D machine tool mounted on the case body and can automatically engrave a 3-D engraving body in 3-D in the shape of a projection or a concavity using the data from the data exchange software so that the automatic 3-D engraving device can engrave the 3-D engraving body in 3-D shape due to move the automatic 3-D engraver by the exclusive data, after the data of the 3-D measuring instrument is converted to the exclusive data for the automatic 3-D engraver when a person as a subject is placed in front of the case body and the person allows the 3-D measuring instrument work.
   Therefore, the present invention is used as the same way of the conventional machine of PRINT CLUB (PRINT CLUB is a registered trademark of ATLUS Co.,Ltd.).
(2) As discussed in the above paragraph, the person as a subject can take the 3-D engraving body, which is engraved in 3-D, which is used for goods like a souvenir, a key holder, or a pendant in a short time.
(3) As discussed in the above paragraph, because the 3-D measuring instrument and the automatic 3-D engraver which are on the market are used in, manufacturing is facilitated and inexpensive.
(4) As discussed in the above paragraph, because the present invention can perform to engrave the 3-D engraving body in 3-D in the shape of a projection, its 3-D engraving body is used as a pattern.

## Claims

1. An automatic three-dimension engraving device comprising:
a case body;
a three-dimension measuring instrument installed into the case body and placed in front of a front surface of the case body, the three-dimension measuring instrument measuring in 3-D shape data at non-contact ;
a data exchange software which converts the data of the three-dimension measuring instrument to an exclusive data for automatic three-dimension engraver; and
a three-dimension machine tool which is mounted on the case body and which can automatically engrave a three-dimension engraving body in 3-D in the shape of a projection or a concavity using the data from the data exchange software.

2. An automatic three-dimension engraving device according to Claim 1, wherein the case body has a monitor that shows a subject which is measured by the three-dimension measuring instrument.

3. An automatic three-dimension engraving device according to Claim 1, wherein the three-dimension measuring instrument is a laser three-dimension measuring instrument can measure a 3-D shape data at non-contact using a laser beam.

4. An automatic three-dimension engraving device according to Claim 1, wherein the three-dimension measuring instrument has at least two or more digital cameras which are disposed at a different position.

5. An automatic three-dimension engraving device according to Claim 1, wherein the three-dimension measuring instrument further comprises a digital camera which takes the outline data of a subject and a laser three-dimension measuring instrument which takes the data for a surface portion inside the outline of the subject using a laser beam.

6. An automatic three-dimension engraving device according to Claim 1, wherein the case body has an operating device which allows the three-dimension measuring instrument and the three-dimension machine tool to work automatically.

7. An automatic three-dimension engraving device comprising:
a case body;
a three-dimension measuring instrument installed into the case body and placed in front of a front surface of the case body, and measures three-dimension shape data at non-contact;
a data exchange software which converts the data with the three-dimension measuring instrument to exclusive data for automatic three-dimension engraver;
a three dimension machine tool mounted on the case body and can automatically engrave a three-dimension engraving body in 3-D in the shape of a projection or a concavity using the data from the data exchange software; and
an operating device installed in the case body and allows the three-dimension measuring instrument and the three-dimension machine tool work.

8. An automatic three-dimension engraving device according to Claim 7, wherein the case body has a monitor that shows a subject which is measured by the three-dimension measuring instrument.

9. An automatic three-dimension engraving device according to Claim 7, wherein the three-dimension measuring instrument is a laser three-dimension measuring instrument can measure a 3-D shape data as an exclusive data for an automatic three-dimension engraver at non-contact using a laser beam.

10. An automatic three-dimension engraving device according to Claim 7, wherein the three-dimension measuring instrument further comprises at least two or more digital cameras which are disposed at different position and a data exchange software which converts so as to do the exclusive data for the automatic three-dimension engraver from the data projected by the digital cameras

11. An automatic three-dimension engraving device according to Claim 7, wherein the three-dimension measuring instrument further comprises a digital camera which takes the data for outline of a subject; a laser three-dimension measuring instrument which takes the data for a surface portion inside the outline of the subject using a laser beam; and a data exchange software which converts so as to do the exclusive data for the automatic three-dimension engraver from the data projected by the digital camera and the laser three-dimension measuring instrument.

12. An automatic three-dimension engraving device according to Claim 7, wherein the case body has an operating device which allows the three-dimension measuring instrument and the three-dimension machine tool work automatically.
